# EUROPEAN PATENT APPLICATION

(11) **EP 1 592 103 A2**
(43) Date of publication of application: **02.11.2005**
(21) Application number: 05075925.7
(22) Date of filing: 18.04.2005
(51) Int. Cl.: H02G 3/36, H02G 3/08

(54) **Connection box and cover element for a connection box**

(30) Priority: 16.04.2004 NL 1025967
(71) Applicant: VAN GEEL SYSTEMS B.V., 5281 RS Boxtel (NL)
(72) Inventor: Van den Ekart, Martinus Maria, 5271 AM St. Michielsgestel (NL); Van Leeuwen, Jan, 5291 AK Gemonde (NL)
(74) Representative: Hoorweg, Petrus Nicolaas

(57) **Abstract**

Connection box for floor channel systems and the like, comprising a base, a frame which can be mounted thereon, and a cover which can be fixed on this frame, wherein adjusting means are provided substantially between the frame and the base for adjusting the height of the frame relative to the base.

According to the invention the adjusting means consist of at least three sets of at least three elements directed substantially perpendicularly of the base and co-acting telescopically in pairwise manner.

According to a possible variant the adjusting means consist of at least three sets of at least three elements directed substantially perpendicularly of the base and co-acting telescopically in pairwise manner.

## Description

The present invention relates to a connection box for floor channel systems and the like, comprising a base, a frame which can be mounted thereon, and a cover which can be fixed on this frame. The present invention further relates to a closing element between the cover and the base or a channel extending into the connection box and making contact with the base, for the purpose of covering a side of the connection box.

Such a connection box is typically used in floor channel systems, wherein it for instance forms the connection between two floor channels for receiving cables, and can function as a through-box, a corner box, a T-box or a cross box. Two or more floor channels are typically connected to each other by connection boxes which for instance provide a change of direction and/or form a location where the cables in the floor system are readily accessible by removing the cover. A finishing floor, for instance a concrete floor, is arranged above the floor channels and around the connection box.

A closable box for a floor channel system is known from DE 6906706. The box has a frame for a cover. From the cover a number of side walls extend downward, the ends of which protrude through an opening of the base plate. The frame is movable relative to the base plate by means of adjusting screws.

A problem of the known connection box is limited adjustability.

Other possible drawbacks of known connection boxes are that these connection boxes cannot be used in a practical manner for different floor thicknesses, floor channel dimensions and floor channel patterns. It is particularly important here that the sides between the cover and the base, or a floor channel extending into the connection box, are closed in order to avoid entry of the concrete mixture into the connection box. In a number of systems this takes place using metal gauze or a flexible polymer flap which is attached to the cover and extends to the base, around the periphery of the floor channels.

The invention has for its object to propose a connection box which can be modified in efficient manner to the floor thickness, and to propose a closing element with which the connection box can be closed in convenient manner.

The invention is distinguished for this purpose in that the adjusting means consist of at least three sets of at least three elements directed substantially perpendicularly of the base and co-acting telescopically in pairwise manner. It is noted here that telescopically co-acting elements must be understood to mean two elements which can be moved into and out of each other. This movement can be a pure sliding movement, such as for instance a hollow tube which can slide over another tube and can for instance be locked by radially oriented pins through the tubes; but can also be a sliding movement which is accompanied by a rotating movement, such as for instance a screw which is rotated in a bush.

By using elements co-acting telescopically in pairwise manner the height can substantially amount to a multiple of the minimum height when all elements are retracted into each other as far as possible. The use of telescopic elements furthermore has the advantage that elements never protrude above the frame.

According to a further developed embodiment of the invention, each of the at least three elements co-acting telescopically in pairwise manner is provided with a screw thread which co-acts with the screw thread of a corresponding element. In this manner the height is adjustable by rotating a first element relative to a corresponding element.

According to an even further developed embodiment variant, each set has three elements co-acting telescopically in pairwise manner, wherein a first element is a screw which is connected non-rotatably to respectively the base or the frame, the element co-acting therewith is an adjusting bush, and the third element, likewise co-acting with the adjusting bush, is a threaded bore fixedly connected to respectively the frame or the base. In this manner both the position of the screw relative to the adjusting bush and the position of the threaded bore relative to the adjusting bush can be changed by rotating the adjusting bush, and the height of the frame relative to the base can thus be adjusted.

Note that it is thus possible to connect the screw fixedly to the base, and the threaded bore to the frame, but that the reverse is also possible. Further note that it is also possible to use more than three elements, wherein screws, adjusting bushes and threaded bores are combined in analogous manner.

The screw and the threaded bore in the connection box preferably have a different type of screw thread, the screw will thus for instance have a left-hand thread and the threaded bore a right-hand thread, or vice versa. In this manner the rotating of the adjusting bush in a first direction simultaneously causes a change in the position of the adjusting bush relative to the screw and a change in the position of the adjusting bush relative to the threaded bore, both of which contribute in the same sense to a change in the height of the frame relative to the base.

According to a possible embodiment, the screw is provided with a head which is received in a clinch ring fixed on the base respectively the frame for obtaining a limited freedom of movement in a plane parallel to the base. In this way, particularly when not all sets of the adjusting means are being operated simultaneously and there is therefore a difference in height between different points of the frame, some lateral play will be obtained, which limits the load on the material of the frame and the adjusting means.

According to a further aspect of the invention, the head of the screw is provided with a slot which co-acts with a part which protrudes from the base respectively the frame and has a form complementary to the slot, for the purpose of obtaining a non-rotating connection between screw and base or frame. If the screw is connected non-rotatably to the base, this part protruding from the base can be arranged in convenient manner in a base plate by punching through a part having a form which is complementary to the slot.

The frame is further preferably provided with a number of grooves directed substantially perpendicularly of the base for receiving a closing element which is slidable in these grooves for the purpose of closing a side of the connection box between the cover and the base, or a channel extending into the connection box and making contact with the base.

A further object of the invention is to provide a connection box with which a floor channel can be positioned and locked relative to the connection box.

The connection box according to the invention is distinguished for this purpose in that the base is provided on its peripheral edge with at least one pair of lips which are arranged at a distance from each other corresponding substantially to the width of a floor channel, which lips can be folded first upward and then against the channel. Positioning of the floor channel can be obtained by folding the lips upward, and by then folding them against the channel the floor channel is locked on the base of the connection box. In this manner a good electrical contact is moreover ensured between the floor channel and the base of the connection box, so that in simple manner a good earthing of the floor channel system is achieved for different material thicknesses, whereby additional connecting techniques become unnecessary.

According to a preferred embodiment, the lips are formed by providing recesses in the base which have a form adapted to the form of the lips. Note that a number of pairs of lips can be arranged, wherein each pair is suitable for a channel of a determined width. These lips can moreover be provided on different sides of the box such that the box can be used as required as through-box, corner box, T-box or cross box.

The invention further relates to a closing element of the type stated in the first paragraph, which is distinguished in that the closing element is a plate-like element which is provided with a number of bending lines and cutting lines, such that the closing element can be given a suitable form to close a side of the connection box between the cover and the base or the channel.

The plate-like element is preferably provided with a number of substantially parallel bending lines, wherein each bending line can be used to modify the element to the height of the frame or to the height of the channel. The plate-like element is preferably further provided with a number of substantially parallel cutting lines which are oriented perpendicularly of the bending lines and which can be used to modify the element to the width of the floor channel.

Such a universal plate-like element can thus be modified in practical manner to the height of the frame and to the used floor channels such that with one type of closing element a good sealing of the box can be achieved irrespective of the set height of the frame relative to the box and irrespective of the type of floor channel whose use is desired.

According to a possible embodiment, the closing plate is provided on the top with a flange-like edge which is slidable in corresponding grooves of the frame of the connection box. The closing plate can thus be mounted on the connection box in simple manner.

The invention will be further elucidated using a number of non-limitative exemplary embodiments of the invention, which will now be described with reference to the accompanying figures, in which:
fig. 1 is a cut-away perspective view of an embodiment of the connection box according to the invention;
fig. 2 is a perspective view of the embodiment of fig. 1 in the mounted position;
fig. 3 is a detail view of the underside of the embodiment of fig. 1;
fig. 4 is a detail view of the embodiment of fig. 1, wherein a floor channel is positioned on the base of the connection box;
fig. 5 is a detail view corresponding with fig. 4, wherein the floor channel is locked onto the base of the connection box;
fig. 6 is a front view of an exemplary embodiment of the closing element according to the invention;
fig. 7 is a perspective view of the closing element of fig. 6, after it has been adapted in a first manner for use with a determined floor thickness and a determined type of floor channel;
fig. 8 is a perspective view of the closing element of fig. 6, after it has been adapted in a second manner for use with a determined floor thickness and a determined type of floor channel; and
fig. 9 is a perspective view of an exemplary embodiment of the connection box according to the invention provided with a number of closing elements.

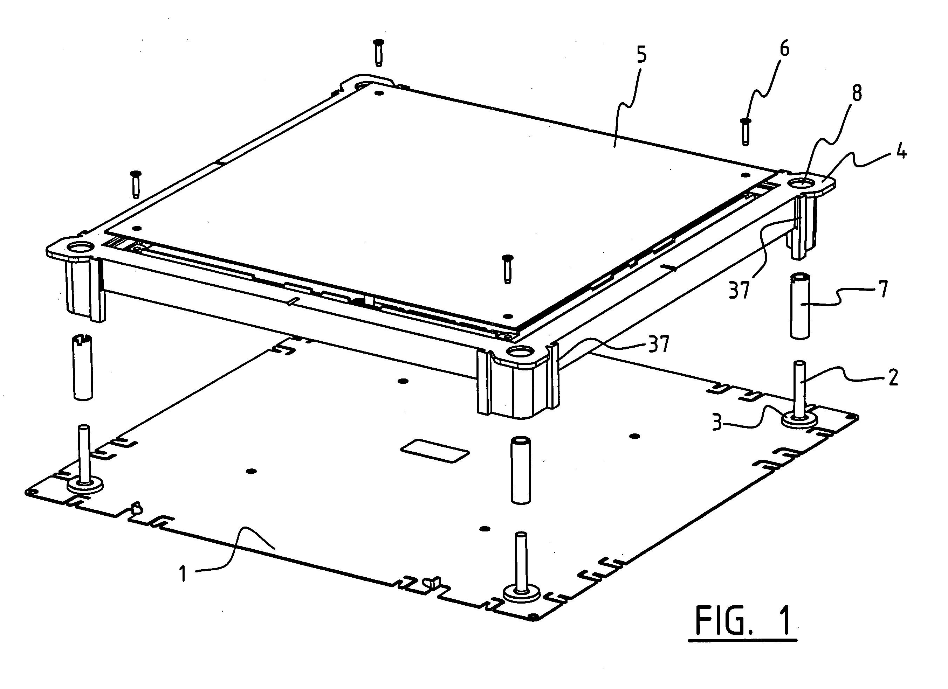

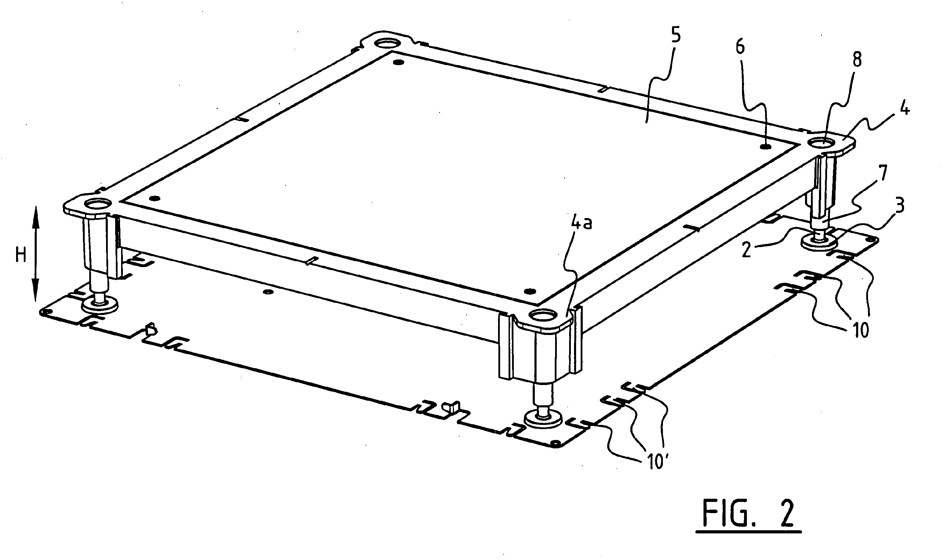

Fig. 1 shows an exemplary embodiment of a connection box according to the invention. The connection box comprises a base 1, a frame 4 which can be mounted thereon and a cover 5 which can be fixed on this frame 4. Between frame 4 and base 1 are provided adjusting means for setting the height H (see fig. 2) of frame 4 relative to base 1.

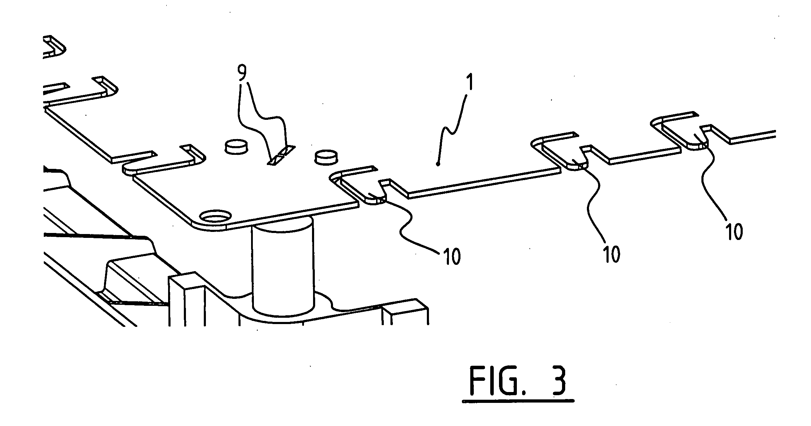

The adjusting means consist of four sets of three elements 2, 7, 8 which are directed perpendicularly of base 1 and co-act telescopically in pairwise manner, and which are arranged at the corner points of frame 4. The first element is a screw 2 which is connected non-rotatably to base 1. This non-rotating connection is here obtained by using a screw having a head with slot, and by providing base plate 1 with a part 9 protruding from the base and having a form complementary to the slot. In fig. 3, which shows the underside of base plate 1, this part protruding from the base is designated with reference numeral 9. The head of screw 2 is received in a clinch ring 3 fixed on the base in order to obtain a limited possible movement of screw 2 in a plane parallel to the base.

The second element of the three telescopically co-acting elements is adjusting bush 7, and the third element is threaded bore 8. According to a possible embodiment, the adjusting bush is of the M14/8 type and screw 2 is of the PV M8x50 type, and threaded bore 8 is adapted to adjusting bush 7. In this manner it becomes possible for instance to achieve an adjustment range of 55 to 140 mm, wherein the frame is raised 2.5 mm per rotation (2x the pitch of 1.25 mm). Screw 2 here has a right-hand thread, while threaded bore 8 uses a left-hand thread such that raising the adjusting bush likewise results in a raising of the frame relative to the adjusting bush. The skilled person will understand that the above stated values and types are only an example, and that many variants are possible depending on the desired adjustment range.

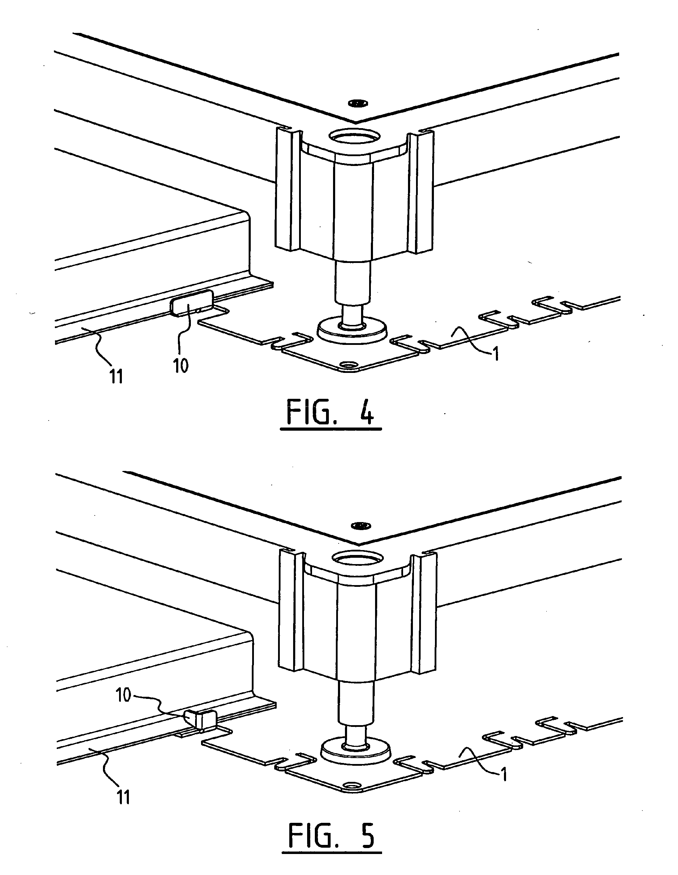

Base plate 1 is further provided on each of its four side edges with thee pairs of lips 10, 10', wherein the lips of each pair are situated at a distance from each other substantially corresponding to the width of a determined type of floor channel. By bending these lips 10, 10' upward as shown in fig. 4, a floor channel can be positioned between one pair of lips 10, 10'. As shown in fig. 5, the lips can then be folded against the channel to clamp the channel fixedly against base 1 of the connection box. In this manner a good electrical contact is obtained between floor channel 11 and base 1 on the one hand, and it is ensured on the other that floor channel 11 is connected in substantially immobile manner to base 1. Floor channel 11 does not therefore have to be welded to base 1.

Finally, frame 4 can be provided at different positions with grooves, whereby the connection box can be positioned and aligned in simple manner during installation thereof.

After the installation of the floor channels and the connection boxes, the connection box must be provided with side walls. These side walls can take on the form of a closing element according to the invention, as will be elucidated in detail hereinbelow.

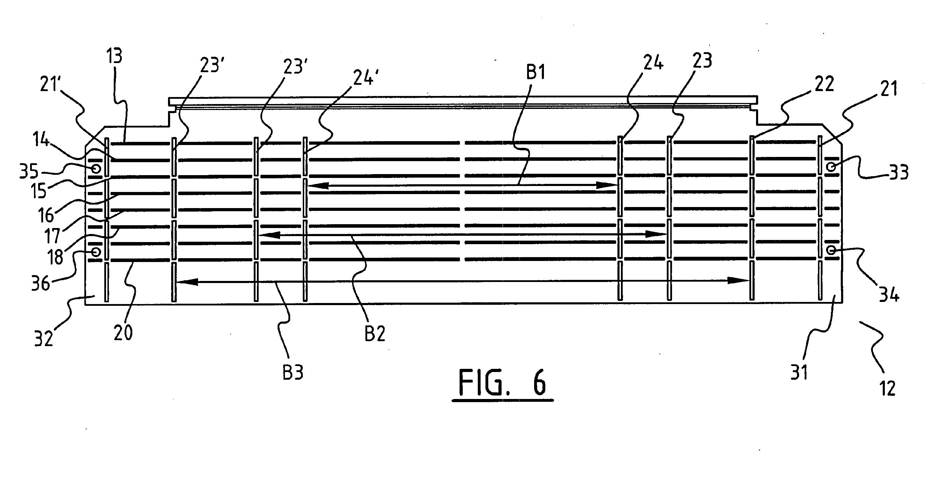

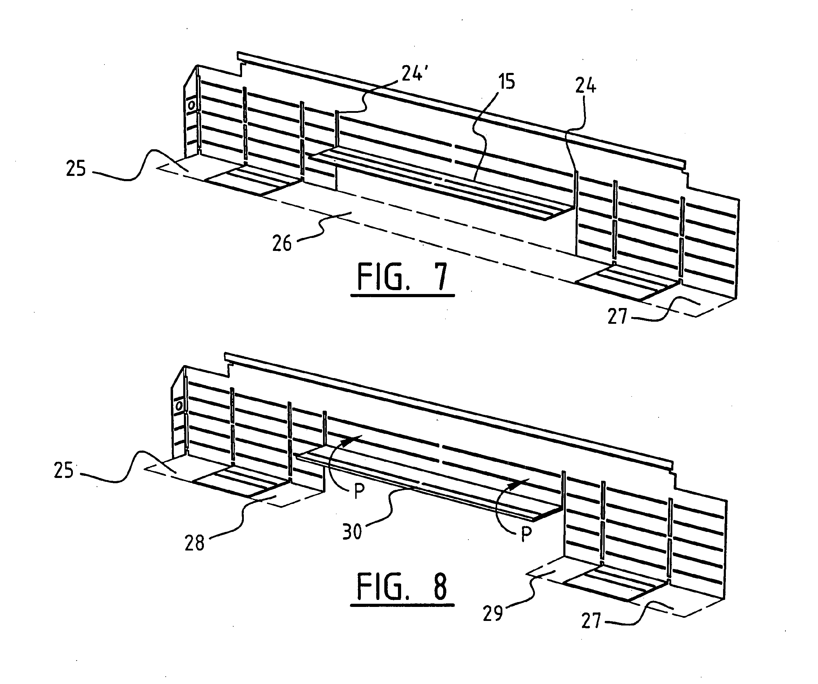

Fig. 6 shows a front view of an exemplary embodiment of the closing element according to the invention. The closing element is a plate-like element 12 which is provided with a number of bending lines 13 to 20 and a number of cutting lines 21 to 24, 21' to 24'. In this embodiment the bending lines 15 to 20 can for instance be used to adapt closing plate 12 to the height H at which the connection box is set. Cutting lines 22 to 24 and 22' to 24' can be used to adapt the closing element to the width of the floor channel. For a floor channel with a width B2, cutting lines 23 and 23' will for instance be partially cut through. Note that bending lines 13 to 20 can also be cut, but it is generally recommended to bend the part to be removed at a right angle, as will be set forth below with reference to fig. 7, 8 and 9.

In the example set forth the closing element is adapted to a floor channel with a width B1 and a set height corresponding to bending line 18. According to a first example, a number of parts below bending line 18 can be cut away, and cutting lines 24 and 24' can be cut up to bending line 15.

In accordance with another option which is illustrated in fig. 8, only the pieces 25 and 27 are cut away, and pieces 28 and 29 are folded as indicated with arrows P. Cutting lines 24 and 24' are here also cut up to bending line 15, but the piece 30 thereby released is folded double and bent through 90°.

For the adjustment shown in fig. 7 more cutting is required than for the adjustment shown in fig. 8 but, conversely, this latter requires more bending.

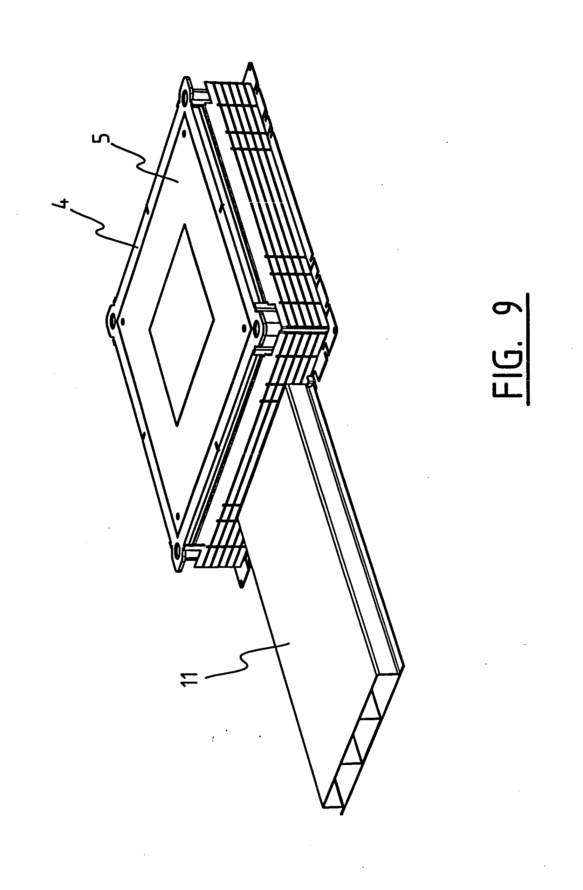

As illustrated in fig. 9, the closing elements can be slotted into the grooves on the side of the connection box after the floor box has been set to the correct height. These closing elements can then be mutually connected and fixed. This can for instance take place by bending side flanges 31, 32 (see fig. 6), or using for instance a cable cord through holes 33-36 in side flanges 31, 32, or with adhesive tape, a steel binding wire, etc.

In order to elucidate the advantages of the invention still further, the assembly of a connection box according to the invention is briefly described below.

There is generally a drawn installation plan, which will make clear whether through-boxes, corner boxes, T-boxes or cross boxes are being used. The floor channel widths and heights which must be connected to the diverse connection boxes are also known. Before the floor box is set in place, the correct lip 10, 10' can be bent upward, whereby a width and middle centring of floor channel 11 on the connection side of the connection box is obtained. In order to facilitate positioning and aligning, the connection box can be provided on the top with a centre marking on each side. After alignment the box can be fixed to a concrete construction floor using for instance four drive plugs.

When the first connection box is mounted, the laying and mounting of the floor channels made to size can begin. From this "fixed point" the channels and boxes are laid and mounted serially. The channels are clamped on the pre-cleaned base plate by bending down the already bent, upright lips. These clamping lips have two functions, i.e. to fix the floor channel on the connection box and to establish an electrical earth contact. In addition, the stated solution has the advantage that there is no necessity for a stop or fixed insertion depth of the channel relative to the floor box, thereby creating a freedom to absorb installation tolerances by means of a small variation in the insertion depth of the channel in the floor box. The connection boxes can now be set to the desired finishing floor height. Height-adjustment can take place using a special bit in combination with an electrical screwdriver which is set at a light position of a maximum of 5 Nm. A standard manual or machine screwdriver with a width of 13x2 mm is also possible.

After setting the height of the connection boxes, the nominal height is known or can be measured. The side walls (closing plates 12) can be adapted by means of cutting and bending. This assembly does not have to take place in situ, and can be prepared in a comfortable work posture. Note that the diverse connection boxes can vary slightly in height. This can be compensated by the insertion tolerance present in insertion grooves 37 arranged in the frame. After adjustment, the side walls can be pushed into the grooves and mutually connected to form a strong whole. The side walls can optionally also be fixed and/or sealed with adhesive tape. The finishing floor can now be arranged and made level with the upper side of the box edge. No parts protrude above this edge, so that the floor can be levelled neatly.

The invention is not limited to the above described exemplary embodiments; and the skilled person will appreciate that many modifications are possible within the scope of the invention, which is defined solely by the following claims.

## Claims

1. Connection box for floor channel systems and the like, comprising a base (1), a frame (4) which can be mounted thereon, and a cover (5) which can be fixed on this frame, wherein adjusting means are provided substantially between the frame and the base for adjusting the height (H) of the frame (4) relative to the base (1), **characterized in that** the adjusting means consist of at least three sets of at least three elements (7, 8, 2) directed substantially perpendicularly of the base and co-acting telescopically in pairwise manner.

2. Connection box as claimed in claim 1, **characterized in that** each of the at least three elements co-acting telescopically in pairwise manner is provided with a screw thread which co-acts with the screw thread of the corresponding element.

3. Connection box as claimed in claim 2, **characterized in that** each set has three elements co-acting telescopically in pairwise manner, wherein a first element is a screw (2) which is connected non-rotatably to respectively the base (1) or the frame (4), the element co-acting therewith is an adjusting bush (7), and the third element co-acting with the adjusting bush is a threaded bore (8) fixedly connected to respectively the frame or the base.

4. Connection box as claimed in claim 3, **characterized in that** the screw has a right-hand thread and the threaded bore a left-hand thread, or vice versa.

5. Connection box as claimed in claim 3 or 4, **characterized in that** the screw (2) is provided with a head which is received in a clinch ring (3) fixed on the base (1) respectively the frame (4) for obtaining a limited play in a plane parallel to the base.

6. Connection box as claimed in claim 5, **characterized in that** the head of the screw is provided with a slot which co-acts with a part (9) which protrudes from the base respectively the frame and has a form complementary to the slot, for the purpose of obtaining a non-rotating connection between screw and base or frame.

7. Connection box as claimed in any of the foregoing claims, **characterized in that** the frame is provided with a number of grooves (37) directed substantially perpendicularly of the base for receiving a closing element (12) which is slidable in these grooves for the purpose of closing a side of the connection box between the cover and the base, or a channel extending into the connection box and making contact with the base.

8. Connection box as claimed in any of the claims 1-6, **characterized in that** the base is provided on its peripheral edge with at least one pair of lips (10, 10') which are arranged at a distance from each other corresponding substantially to the width of a floor channel, which lips can be folded first upward and then against the channel for the purpose of fixing, earthing and/or absorbing mounting tolerances.

9. Connection box as claimed in claim 8, **characterized in that** the lips (10, 10') are formed by providing recesses in the base which have a form adapted to the form of the lips.

10. Closing element between the cover and the base or a channel extending into the connection box and making contact with the base for closing a side of the connection box as claimed in any of the foregoing claims, **characterized in that** the closing element is a plate-like element (12) which is provided with a number of bending lines (13-20) and cutting lines (21-24; 21'-24') such that the closing element can be given the suitable form to close a side between the cover and the base or the channel.

11. Closing element as claimed in claim 10, **characterized in that** the plate-like element is provided with a number of substantially parallel bending lines (13-20), which bending lines can be used to modify the element to the height of the frame or to the height of the channel.

12. Closing element as claimed in claim 10 or 11, **characterized in that** the plate-like element is provided with a number of substantially parallel cutting lines (21-24; 21'-24') which are oriented perpendicularly of the bending lines and which can be used to modify the element to the width of the floor channel.

13. Closing element as claimed in any of the claims 10-12 for a connection box according to claim 6, **characterized in that** the closing plate is provided on the top with a flange-like edge (38) which is slidable in corresponding grooves (37) of the frame of the connection box.
